# EUROPÄISCHE PATENTSCHRIFT

(11) **EP 1 004 465 B1**
(45) Veröffentlichungstag und Bekanntmachung des Hinweises auf die Patenterteilung: **08.06.2005**
(21) Anmeldenummer: 99122584.8
(22) Anmeldetag: 12.11.1999
(51) Int. Cl.: B60J 5/04

(54) **Rammschutzträger**
Side intrusion beam
Poutre de protection anti-choc

(30) Priorität: 24.11.1998 DE 19854185
(43) Veröffentlichungstag der Anmeldung: 31.05.2000
(73) Patentinhaber: DURA Automotive Body & Glass Systems GmbH & Co. KG, 58840 Plettenberg (DE)
(72) Erfinder: Bachmann, Horst, 44793 Bochum (DE); Schulte, Martin, 58802 Balve (DE); Horstkötter, Ralf, 58644 Iserlohn (DE)
(74) Vertreter: Gossel, Hans K., Dipl.-Ing.

(56) Entgegenhaltungen:
- DE-A- 4 306 824
- DE-A- 19 756 459
- US-A- 5 232 261
- US-A- 5 722 708

## Beschreibung

Die Erfindung betrifft einen Rammschutzträger zum Aufprallschutz von Kraftfahrzeugen, z.B. für Türen oder Seitenwände oder Stoßstangen, bestehend aus einem Hohlprofil mit einem Druckgurt und einem Zuggurt.

Rammschutzträger dieser Art sind beispielsweise aus DE 43 03 435 C2, EP 0 390 769 A1 und DE 36 06 024 A1 bekannt. Die bekannten Rammschutzträger bestehen im wesentlichen aus rechteckigen Kastenprofilen mit im wesentlichen ebenen Zug- und Druckgurte verbindenden Stegen, die ebenfalls im wesentlichen eben sind und parallel zueinander verlaufen, wobei die Druck- und/oder Zuggurte über die Verbindungstege hinaus verlängert sind. Die bekannten Profile der Rammschutzträger sind im Strangpreßverfahren hergestellt.

Aus DE 197 56 459 A1 und der US-PS 5,580,120 sind Querträger zum Einbau in Kraftfahrzeugtüren bekannt, die als Seitenaufprallschutz dienen. Die bekannten Querträger sind durch Rollformen hergestellt und weisen seitliche Stege mit konkaver Form auf.

Aus DE 43 03 435 A1 ist ein im Strangpreßverfahren hergestellter Rammschutzträger bekannt, dessen Druckgurt breiter ausgestaltet ist als dessen Zuggurt.

Aus der US-A-5 722 708 ist ein Rammschutzträger nach dem Oberbegriff des Anspruchs 1 bekannt.

Aufgabe der Erfindung ist es, einen Rammschutzträger der eingangs angegebenen Art mit einem einfacher und daher billiger herzustellenden Profil zu schaffen, das sich durch eine hohe Energieaufnahme bei seiner Verformung auszeichnet.

Erfindungsgemäß wird diese Aufgabe durch die Merkmale des Patentanspruchs 1 gelöst. Der Träger ist durch Rollformen aus einem Metallband hergestellt. Die Übergänge zwischen dem Zuggurt und den Stegen sind durch Rundungen gebildet.

Der erfindungsgemäße Rammschutzträger läßt sich durch bekannte Rollformverfahren in einfacher und kostengünstiger Weise herstellen. Aufgrund der konkaven Form der seitlichen Stege faltet sich das Profil beim Auftreffen von im wesentlichen punktförmig wirkenden Druckkräften etwa ziehharmonikaartig zusammen, so daß es zu seiner Verformung hohe Energie aufzunehmen vermag, bevor es höchstens im zusammengefalteten Zustand zu einem Biegekollaps kommt. Die hohe Energieaufnahme des erfindungsgemäßen Rammschutzträgers wird zusätzlich dadurch begünstigt, daß der Zuggurt breiter ausgebildet ist als der Druckgurt und daß der Druckgurt eine konkave Form besitzt.

Zweckmäßigerweise sind die Übergänge zwischen dem Druckgurt und den Stegen durch Rundungen gebildet.

Nach einer bevorzugten Ausführungsform ist vorgesehen, daß die die Seitenkanten des Metallbandes verbindende Naht im mittleren Bereich des Druckgurts liegt. Die Naht kann als Schweißnaht ausgebildet sein.

Zweckmäßigerweise besteht das Metallband aus Blech gleicher Dicke.

Vorzugsweise besteht das Profil aus Stahlblech.

Ein Ausführungsbeispiel der Erfindung wird nachstehend anhand der Zeichnung näher erläutert. In dieser zeigt
- Fig. 1: einen Querschnitt durch den erfindungsgemäßen Rammschutzträger,
- Fig. 2: den Querschnitt des Rammschutzträgers nach Fig. 1 unter einer geringen Belastung eines auf die gewölbten Eckbereiche des Druckgurts wirkenden Stempels,
- Fig. 3: die Verformung des Querschnitts des Rammschutzträgers nach den Fig. 1 und 2 unter Einwirkung von hoher Belastung durch einen Stempel und
- Fig. 4: eine perspektivische Ansicht des Rammschutzträgers nach Fig. 1 mit beschnittenen Enden.

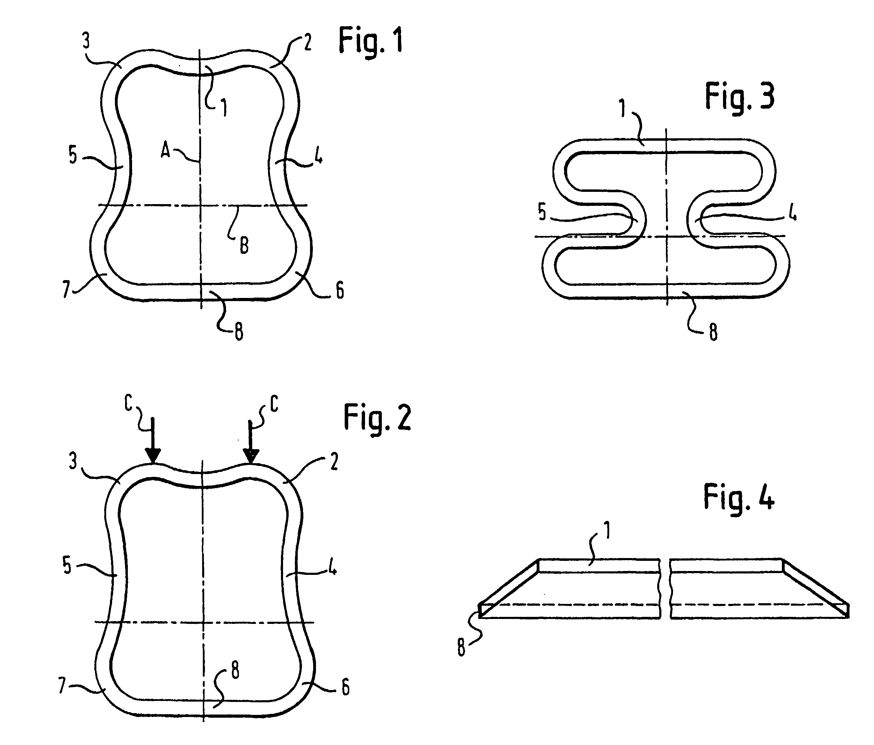

Der Querschnitt des erfindungsgemäßen Rammschutzträgers ist aus Fig. 1 im unverformten Zustand ersichtlich. Der Rammschutzträger besteht aus einem Druckgurt 1 mit konkaver Form, der über seitliche Bogenstücke 2, 3 mit seitlichen Stegen 4, 5 von ebenfalls konkaver Form verbunden ist, die durch Bogenstücke 6, 7 in den ebenen Zuggurt 8 übergehen. Der Zuggurt 8 ist breiter ausgebildet als der Druckgurt 1. Im mittleren Bereich des Zuggurts 8 sind die Seitenkanten des Blechbandes, das zu dem aus Fig. 1 ersichtlichen Profil im Rollverfahren verformt worden ist, miteinander verschweißt.

Das erfindungsgemäße Profil ist zu der Ebene A symmetrisch. Aufgrund der breiteren Ausgestaltung des Zuggurts 8 liegt die neutrale Faser in der Ebene B, die näher an den Zuggurt 8 angenähert ist. Wirken auf die oberen abgerundeten Eckbereiche 2, 3 in Richtung der Pfeile C in Fig. 2 etwa punktartig Druckkräfte, haben die konkav ausgebildeten Stege 4, 5 das Bestreben, nach außen zu wandern. Es bildet sich dadurch ein fast annähernd trapezförmiges Profil aus, das aufgrund der Strekkung der Stege ein höheres Widerstandsmoment aufweist als der Ausgangsquerschnitt. Mit zunehmender Verformung unter der Einwirkung der Druckkräfte vergrößert sich die Wölbung im Druckgurt 1 und die seitlichen Stege 3, 4 wölben sich zunehmend einwärts und nehmen schließlich die aus Fig. 3 ersichtliche, zusammengefaltete ziehharmonikaförmige Form an.

Die Energieaufnahme bis zu diesem Verformungsgrad ist wesentlich größer als diejenige bei den bekannten Trägern. Auch bei dem aus Fig. 3 ersichtlichen Verformungsgrad erfährt der Träger noch keinen Biegekollaps. Er kann sich daher unter weiterer gleichmäßiger Energieaufnahme weiter durchbiegen.

Die Befestigung des erfindungsgemäßen Trägers an einem Türrahmen erfolgt beispielsweise durch das Verbinden des Zuggurts mit dem Türinnenblech in einem Schweiß- oder mechanischen Fügeverfahren.

Aus Fig. 4 ist eine perspektivische Ansicht des Rammschutzträgers nach Fig. 1 sichtlich, dessen Enden zum Zwecke des Einbaus in einen Türrahmen schräg angeschnitten sind. Der Einfachheit halber sind in der schematischen Darstellung die konkaven Verformungen des Druckgurts und der seitlichen Stege nicht dargestellt.

## Patentansprüche

1. Rammschutzträger zum Aufprallschutz von Kraftfahrzeugen, z.B. für Türen oder Seitenwände oder Stoßstangen, bestehend aus einem Hohlprofil mit einem Druckgurt (1) und einem Zuggurt (8), wobei die Druck- und Zuggurte (1, 8) durch seitliche Stege (4, 5) mit konkaver Form miteinander verbunden sind, der Zuggurt (8) breiter ausgebildet ist als der Druckgurt und der Druckgurt (1) eine konkave Form besitzt,
**dadurch gekennzeichnet,**
**daß** der Träger durch Rollformen aus einem Metallband hergestellt ist und die Übergänge zwischen dem Zuggurt (8) und den Stegen (4, 5) durch Rundungen (6, 7) gebildet sind.

2. Rammschutzträger nach Anspruch 1, **dadurch gekennzeichnet, daß** die Übergänge zwischen dem Druckgurt (1) und den Stegen (4, 5) durch Rundungen (2, 3) gebildet sind.

3. Rammschutzträger nach Anspruch 1 oder 2, **dadurch gekennzeichnet, daß** die die Seitenkanten des Metallbandes verbindende Naht im mittleren Bereich des Druckgurts (1) liegt.

4. Rammschutzträger nach einem der Ansprüche 1 bis 3, **dadurch gekennzeichnet, daß** das Metallband aus Blech gleicher Dicke besteht.

5. Rammschutzträger nach einem der Ansprüche 1 bis 4, **dadurch gekennzeichnet, daß** das Metallband aus Stahlblech besteht.

## Claims

1. Side intrusion beam for impact protection of motor vehicles, for example for doors or side walls or bumpers, comprising a hollow profile with a compression flange (1) and a tension flange (8), the tension and compression flanges (1, 8) being connected to each other by lateral webs (4, 5) of a concave shape, the tension flange (8) being made wider than the compression flange, and the compression flange (1) having a concave shape,
**characterized**
**in that** the beam is produced by roll-forming from a metal strip and the transitions between the tension flange (8) and the webs (4, 5) are formed by rounded portions (6, 7).

2. Side intrusion beam according to Claim 1, **characterized in that** the transitions between the compression flange (1) and the webs (4, 5) are formed by rounded portions (2, 3).

3. Side intrusion beam according to Claim 1 or 2, **characterized in that** the seam connecting the side edges of the metal strip lies in the central region of the compression flange (1).

4. Side intrusion beam according to one of Claims 1 to 3, **characterized in that** the metal strip consists of sheet of the same thickness.

5. Side intrusion beam according to one of Claims 1 to 4, **characterized in that** the metal strip consists of steel sheet.

## Revendications

1. Poutre de protection anti-choc pour assurer la protection anti-choc de véhicules automobiles, par exemple pour des portières ou des parois latérales ou des pare-chocs, se composant d'un profilé creux avec une membrure travaillant en compression (1) et une membrure travaillant à la traction (8), alors que la membrure travaillant en compression (1) et la membrure travaillant à la traction (8) sont reliées entre elles par des ailes latérales (4, 5) de forme concave, la membrure travaillant à la traction (8) est conçue avec une largeur plus importante que la membrure travaillant en compression et la membrure travaillant en compression (1) a une forme concave, **caractérisée en ce que** la poutre est réalisée par roulage à partir d'une bande métallique et **en ce que** les passages entre la membrure travaillant à la traction (8) et les ailes (4, 5) sont formés par des zones arrondies (6, 7).

2. Poutre de protection anti-choc selon la revendication 1, **caractérisée en ce que** les passages entre la membrure travaillant en compression (1) et les ailes (4, 5) sont formés par des zones arrondies (2, 3).

3. Poutre de protection anti-choc selon la revendication 1 ou 2, **caractérisée en ce que** le raccord d'assemblage reliant les arêtes latérales de la bande métallique se trouve dans la zone médiane de la membrure travaillant en compression (1).

4. Poutre de protection anti-choc selon l'une quelconque des revendications 1 à 3, **caractérisée en ce que** la bande métallique se compose de tôle d'épaisseur égale.

5. Poutre de protection anti-choc selon l'une quelconque des revendications 1 à 4, **caractérisée en ce que** la bande métallique se compose de tôle d'acier.
